# EUROPEAN PATENT APPLICATION

(11) **EP 4 546 905 A1**
(43) Date of publication of application: **30.04.2025**
(21) Application number: 23826011.1
(22) Date of filing: 11.05.2023
(51) Int. Cl.: H04W 64/00

(54) **LOCATION MESSAGE PROCESSING METHOD, APPARATUS, STORAGE MEDIUM, AND ELECTRONIC APPARATUS**

(30) Priority: 24.06.2022 CN 202210734119
(71) Applicant: ZTE CORPORATION, Shenzhen, Guangdong 518057 (CN)
(72) Inventor: HUANG, Lin, Shenzhen, Guangdong 518057 (CN); ZHOU, Gongcai, Shenzhen, Guangdong 518057 (CN); QIU, Kan, Shenzhen, Guangdong 518057 (CN)
(74) Representative: Carangelo, Pierluigi
(86) International application number: PCT/CN2023/093616
(87) International publication number: WO 2023/246361

(57) **Abstract**

Provided in the present disclosure are a positioning message processing method, an apparatus, a storage medium, and an electronic device. The method includes: acquiring a message type of a received positioning message; acquiring a session identifier from a NonUE message when the message type is the NonUE message that does not carry user information; parsing out a logic number corresponding to a message processing queue according to the session identifier; and distributing the positioning message to the corresponding message processing queue according to the logic number so as to process the positioning message. The present disclosure can solve the problem in the related art that a NonUE message does not comprise direct user information and cannot be distributed to a corresponding message processing module by means of the user information, and thus it cannot be guaranteed that an entire positioning process is in the same positioning module. A NonUE message is allocated to a corresponding message processing queue by means of a session identifier, and thus it can be guaranteed that an entire positioning process is processed in the same positioning module.

## Description

### Cross-Reference to Related Application

The present disclosure is based on Chinese Patent Application No. CN 202210734119.6 filed on June 24, 2002 and entitled "Positioning message Processing Method and Apparatus, Storage Medium, and Electronic Device", and claims priority to this patent application, the disclosure of which is incorporated herein by reference in its entirety.

### Technical Field

Embodiments of the present disclosure relate to the field of communications, and in particular, to a positioning message processing method, an apparatus, a storage medium, and an electronic device.

### Background

With the development of 5G, the high-precision position service capability is further enhanced. Uplink Time Difference of Arrival (UL-TDOA for short) positioning is an important positioning method in 5G positioning, and the main principle thereof is to calculate a position by using a time difference of arrival of an uplink reference signal to base stations. The protocol used for UL-TDOA positioning is 3GPP TS 38.455 NRPPa (New Radio Positioning Protocol A). UL-TDOA positioning is performing position service operations by means of a plurality of network elements such as a Location Management Function (LMF), an Access and Mobility Management Function (AMF), and a Unified Data Management (UDM) of a core network. The LMF is the most critical network element in the positioning method, and is mainly responsible for calculating the position and returning a positioning result.

The LMF does not directly interact with a base station, but interacts with the base station by means of the AMF. The LMF sends the content of the NRPPa to the base station by means of the AMF, and likewise, the base station returns the content of the NRPPa to the LMF by means of the AMF. Messages exchanged between the AMF and the LMF are divided into user equipment (UE) specific messages (hereinafter referred to as UE message for short) and non UE specific messages (hereinafter referred to as NonUE message for short).

Generally, an LMF comprises a plurality of identical message processing modules, and the modules are independent of each other, so as to achieve the purpose of load sharing to improve the performance. After the AMF sends the message to the LMF, the LMF distributes the message to a specific message processing module. The UE message directly comprises UE-related information, and the LMF can distribute the message to a corresponding module according to the information of the UE. However, the NonUE message does not comprise direct user information, and cannot be distributed to a corresponding message processing module according to the user information.

Regarding the problem in the related art that a NonUE message does not comprise direct user information and cannot be distributed to a corresponding message processing module be means of the user information, and thus it cannot be guaranteed that an entire positioning process is in the same positioning module, no solution has been proposed.

### Summary

Embodiments of the present disclosure provide a positioning message processing method, an apparatus, a storage medium, and an electronic device, so as to at least solve the problem in the related art that a NonUE message does not comprise direct user information and cannot be distributed to a corresponding message processing module by means of the user information, and thus it cannot be guaranteed that an entire positioning process is in the same positioning module.

According to embodiments of the present disclosure, a positioning message processing method is provided, including:
a message type of a received positioning message is acquired;
a session identifier is acquired from a NonUE message when the message type is the NonUE message that does not carry user information;
a logic number corresponding to a message processing queue is parsed out according to the session identifier; and
the positioning message is distributed to the corresponding message processing queue according to the logic number, so as to process the positioning message.

According to some other embodiments of the present disclosure, a positioning message processing apparatus is further provided, including:
a first acquisition module, configured to acquire a message type of a received positioning message;
a second acquisition module, configured to acquire a session identifier from a NonUE message when the message type is the NonUE message that does not carry user information;
a parsing module, configured to parse out a logic number corresponding to a message processing queue according to the session identifier; and
an allocation module, configured to distribute the positioning message to the corresponding message processing queue according to the logic number so as to process the positioning message.

According to still some other embodiments of the present disclosure, a computer-readable storage medium is further provided, a computer program is stored in the computer readable storage medium, wherein the computer program is configured to cause, when executed by a processor, the processor to perform the steps in any one of the method embodiments above.

According to still yet some other embodiments of the present disclosure, an electronic device is further provided, including a memory and a processor, a computer program that is stored in the memory, and the processor is configured to execute the computer program to perform the steps in any one of the method embodiments.

### Brief Description of the Drawings

Fig. 1 is a structural block diagram of hardware of a mobile terminal for a positioning message processing method according to embodiments of the present disclosure;
Fig. 2 is a flowchart of a positioning message processing method according to embodiments of the present disclosure;
Fig. 3 is a block diagram of a positioning message processing apparatus according to embodiments of the present disclosure; and
Fig. 4 is a block diagram of NonUE message processing in UL-TDOA positioning according to the embodiments.

### Detailed Description of the Embodiments

Hereinafter, embodiments of the present disclosure are described in detail with reference to the accompanying drawings and in conjunction with the embodiments.

It should be noted that the terms "first", "second", etc. in the description, claims, and accompanying drawings of the present disclosure are used to distinguish similar objects, and are not necessarily used to describe a specific sequence or order.

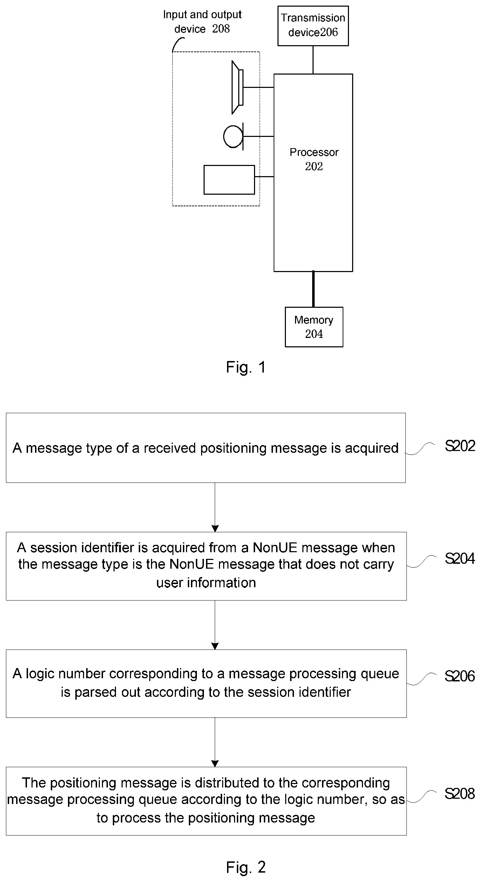

The method embodiments provided in the embodiments of the present disclosure can be executed in a mobile terminal, a computer terminal or a similar computing device. Taking the method embodiments being executed on a mobile terminal as an example, Fig. 1 is a structural block diagram of hardware of a mobile terminal for a positioning message processing method according to embodiments of the present disclosure. As shown in Fig. 1, the mobile terminal may comprise one or more (only one processor is shown in Fig. 1) processors 102 (the processors 102 may comprise, but are not limited to, processing devices such as a microprocessor MCU or a programmable logic device FPGA) and a memory 104 for storing data. The mobile terminal may further comprise transmission device 106 and input and output device 108 for communication functions. A person of ordinary skill in the art would understand that the structure as shown in Fig. 1 is merely exemplary, and does not limit the structure of the mobile terminal. For example, the mobile terminal may further comprise more or fewer components than those shown in Fig. 1, or have a different configuration from that shown in Fig. 1.

The memory 104 may be used for storing a computer program, for example, a software program and module of application software, such as a computer program corresponding to the positioning message processing method in embodiments of the present disclosure; and the processor 102 executes various functional applications and service chain address pool slice processing by running the computer program stored in the memory 104, i.e. implementing the described method. The memory 104 may comprise a high-speed random access memory, and may also comprise a non-transitory memory, such as one or more magnetic storage devices, flash memories or other non-transitory solid-state memories. In some examples, the memory 104 may further comprise memories remotely arranged with respect to the processors 102, and these remote memories may be connected to the mobile terminal via a network. Examples of the network comprise, but are not limited to, the Internet, an intranet, a local area network, a mobile communication network and combinations thereof.

The transmission device 106 is used to receive or send data via a network. Specific examples of the network may comprise a wireless network provided by a communication provider of the mobile terminal. In one example, the transmission device 106 comprises a Network Interface Controller (NIC for short) which may be connected to other network device by means of a base station, thereby being able to communicate with the Internet. In one example, the transmission device 106 may be a radio frequency (RF for short) module which is configured to communicate with the Internet in a wireless manner.

The present embodiment provides a positioning message processing method running on the mobile terminal or a network architecture. Fig. 2 is a flowchart of a positioning message processing method according to embodiments of the present disclosure. As shown in Fig. 2, the process includes the following steps:
At step S202: a message type of a received positioning message is acquired.

In the present embodiment, step S202 may specifically include: the positioning message sent by an authentication management function (AMF) is received; a URL in the positioning message is acquired; and the message type of the positioning message is determined according to the URL; in condition that the URL comprises determine-location, the positioning message is determined to be a positioning request message; in condition that the URL comprises n2-notification, the positioning message is determined to be a UE message; and in condition that the URL comprises non-ue-n2-notification, the message is determined to be the NonUE message.

At step S204: a session identifier is acquired from a NonUE message when the message type is the NonUE message that does not carry user information.

In the present embodiment, step S204 may specifically include: the NonUE message is decoded to obtain NRPPa information; and the session identifier in the NRPPa information is acquired.

At step S206: a logic number corresponding to a message processing queue is parsed out according to the session identifier.

At step S208: the positioning message is distributed to the corresponding message processing queue according to the logic number, so as to process the positioning message.

In the present embodiment, step S208 may specifically include: a transaction ID is extracted from the session identifier; and the positioning message is allocated to a corresponding transaction according to the transaction ID, and the positioning message is processed by means of the message processing queue on the basis of the transaction.

In some embodiments, the method further includes: when it is determined that the positioning message is the positioning request message, the positioning request message is decoded, user information in the positioning request message is acquired, and the positioning message is distributed to any message processing queue according to the user information so as to process the positioning message; and if the positioning message is the UE message, user information is acquired from the URL, and the positioning message is distributed to a corresponding message processing queue according to the user information so as to process the positioning message.

In some other embodiments, before step S208, the method further includes: in condition that the positioning message is a TRP response message, a TRP request message is sent to the AMF at a preset time period; after a TRP measurement response message is received, TRP information is acquired from the TRP response message; and the TRP information is buffered at a preset time period, and a buffer time is recorded.

In still some other embodiments, after the TRP information is buffered at the preset time period and the buffer time is recorded, the method further includes: a positioning request message is received, and a current time is acquired; whether the difference between the current time and the buffer time is within the preset time period is determined; when the determination result is yes, the TRP request message is not sent to the AMF; and when the determination result is no, the TRP request message is sent to the AMF, so as to receive the TRP measurement response message and update the buffered TRP message.

In the present embodiment, a NonUE message is distributed and processed in UL-TDOA positioning, which can solve the problem that the NonUE message cannot be distributed to a corresponding positioning module, thereby implementing distribution, buffering and message processing of the NonUE message.

After the positioning message is received, NRPPa information in the NonUE message is decoded, a session identifier in the NRPPa is acquired, and a logic number is parsed out from the session identifier; the message is sent to a message processing queue according to the logic number; the NRPPa information carried by a NonUE message is mainly a transmission-reception point (TRP) and measurement, and TRP information is buffered in a memory, the TRP being acquired periodically; and a corresponding positioning process session identifier is found according to the session identifier in the NRPPa, ensuring that the message is in the same session. The NonUE message in the present embodiment may specifically be a TRP response message or a measurement response message.

When an LMF receives a message sent from an AMF, a URL in the message is acquired first, and the type of the message is then determined according to the URL. When the URL comprises determine-location, the message is a positioning request message, then the positioning request message is decoded, and user information in the message is acquired, and then the message is distributed to any message processing queue according to the user information. When the URL comprises n2-notification, the message is a UE message, user information is acquired from the URL, and then the message is distributed to a corresponding message processing queue according to the same rule in a positioning request. Since user information in one positioning is the same, it can be guaranteed according to the user information that the UE message is sent to the same message processing queue. When the URL comprises non-ue-n2-notification, the message is a NonUE message, and in this case, the NonUE message needs to be decoded first, and it is determined whether the NonUE message carries information of an NRPPa after decoding. When the NonUE message carries an NRPPa message, the NRPPa message is decoded, and a session identifier Transaction ID of the NRPPa is acquired from the decoded NRPPa message and stored.

The Transaction ID is generated by a message processing queue, and is composed of a logic number logicNo of the message processing queue and transKey; and the present message is sent to a corresponding message processing queue according to the logic number.

TRP information in the received TRP response is buffered. Since a TRP request is not required to be sent for each positioning request, the TRP request is set to be sent periodically, and the TRP information is buffered in a memory within the period. After the message is received, the message is decoded, and after the message is determined to be a TRP response, the TRP information is acquired from the message and stored in the memory, and a current storage time t1 is recorded. After the next positioning request is received, the current time t2 is acquired, and then subtracted from t1, and it is determined whether the difference is within a buffer period; and when the difference exceeds the buffer time, the TRP request needs to be resent, and then the original TRP information is cleared and new information is restored.

A positioning request is received, a measurement message is sent and received and positioning calculation is performed, and finally a positioning result is returned. There are generally a plurality of message processing queues, which are mainly responsible for load sharing so as to prevent performance bottlenecks in individual message processing queues. When a measurement request is sent, a logic number logicNo of a current message processing queue and a session identifier transKey of a positioning process need to be acquired; logicNo is shifted left by 11 bits (corresponding to the description above, which is not specifically limited), and then transKey is added to form the Transaction ID of each measurement request; and TRP information required in the measurement request is acquired from a buffer. When a message processing queue receives a measurement response message, the message is decoded first to acquire the Transaction ID, the lower 11 bits of the Transaction ID is then taken to obtain transKey, and a current session is found according to transKey. After a measurement response is received, a measurement result is acquired from the message, and finally the position is calculated according to the measurement result.

By means of the present embodiment, high-concurrency processing of UL-TDOA can be implemented, and at the same time, a message which does not carry any UE information is accurately distributed to a corresponding processing module, thereby ensuring the integrity of a process.

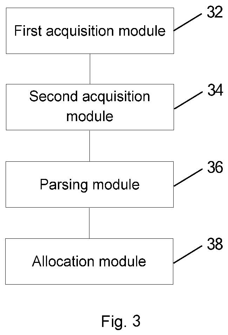

According to some other embodiments of the present disclosure, a positioning message processing apparatus is further provided. Fig. 3 is a block diagram of a positioning message processing apparatus according to embodiments of the present disclosure. As shown in Fig. 3, the apparatus includes:
a first acquisition module 32, configured to acquire a message type of a received positioning message;
a second acquisition module 34, configured to acquire a session identifier from a NonUE message when the message type is the NonUE message that does not carry user information;
a parsing module 36, configured to parse out a logic number corresponding to a message processing queue according to the session identifier; and
an allocation module 38, configured to distribute the positioning message to the corresponding message processing queue according to the logic number so as to process the positioning message.

In some embodiments, the second acquisition module 34 is further configured to decode the NonUE message to obtain NRPPa information; and acquire a session identifier in the NRPPa information.

In some embodiments, the allocation module 38 is further configured to extract a transaction ID from the session identifier; and allocate the positioning message to a corresponding transaction according to the transaction ID, and process the positioning message by means of the message processing queue on the basis of the transaction.

In some embodiments, the first acquisition module is further configured to receive the positioning message sent by an authentication management function (AMF); acquire a URL in the positioning message; and
determine the message type of the positioning message according to the URL: in condition that the URL comprises determine-location, determine that the positioning message is a positioning request message; in condition that the URL comprises n2-notification, determine that the positioning message is a UE message; and in condition that the URL comprises non-ue-n2-notification, determine that the message is the NonUE message.

In some embodiments, the apparatus includes:
a first distribution module, configured to, when it is determined that the positioning message is the positioning request message, decode the positioning request message, acquire user information in the positioning request message, and distribute the positioning message to any message processing queue according to the user information so as to process the positioning message; and
a second distribution module, configured to, when the positioning message is the UE message, acquire user information from the URL, and distribute the positioning message to a corresponding message processing queue according to the user information so as to process the positioning message.

In some embodiments, the apparatus further includes:
a first sending module, configured to send a TRP request message to the AMF at a preset time period in cases where the positioning message is a TRP response message;
a first receiving module, configured to acquire TRP information from the TRP response message after a TRP measurement response message is received; and
a buffer module, configured to buffer the TRP information at a preset time period, and record a buffer time.

In some embodiments, the apparatus further includes:
a second receiving module, configured to receive a positioning request message and acquire a current time;
a determination module, configured to determine whether the difference between the current time and the buffer time is within the preset time period; and
a second sending module, configured not to send the TRP request message to the AMF when the determination result is yes; and to send the TRP request message to the AMF when the determination result is no, so as to receive the TRP measurement response message and update the buffered TRP message.

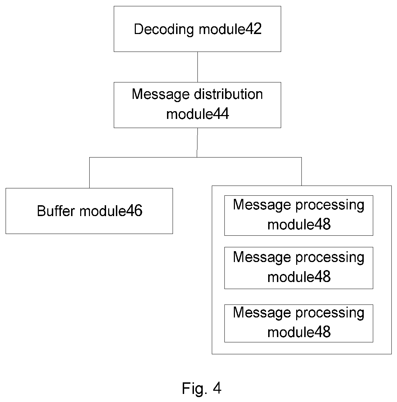

Fig. 4 is a block diagram of NonUE message processing in UL-TDOA positioning according to the embodiments. As shown in Fig. 4, the block diagram includes: a decoding module 42, a message distribution module 44, a buffer module 46 and message processing modules 48 (configured to implement the functions of the described message processing queue).

The decoding module 42 is configured to decode NRPPa information in aNonUE message after receiving a positioning message, acquire a session identifier in the NRPPa, and parse out a logic number of a positioning module from the session identifier.

The message distribution module 44 is configured to send the message to the module according to the logic number of the positioning module.

The NRPPa information carried by a NonUE is mainly a transmission-reception point (TRP) and measurement, and the buffer module is mainly responsible for buffering TRP information in a memory, the TRP being acquired periodically.

The message processing module 48 is configured to find a corresponding positioning process session identifier according to the session identifier in the NRPPa to ensure that the message is in the same session.

The message decoding module 42 is configured to, when an LMF receives a message sent from an AMF, acquire a URL in the message first, and then determine the type of the message according to the URL. When the URL comprises determine-location, the message is a positioning request message, then the positioning request message is decoded, and user information in the message is acquired, and then the message is distributed to any message processing module according to the user information. When the URL comprises n2-notification, the message is a UE message, then user information is acquired from the URL, and then the message is distributed to a corresponding message processing module according to the same rule in a positioning request. Since user information in one positioning is the same, it can be guaranteed according to the user information that the UE message is sent to the same message processing module. When the URL comprises non-ue-n2-notification, the message is a NonUE message, and in this case, the NonUE message needs to be decoded first, and it is determined whether the NonUE message carries information of an NRPPa after decoding. When the NonUE message carries an NRPPa message, the NRPPa message is decoded, and a session identifier Transaction ID of the NRPPa is acquired from the decoded NRPPa message and stored.

The message distribution module 44 is configured to parse the Transaction ID stored from the decoding module, the Transaction ID being generated by the message processing module and composed of a logic number logicNo of the message processing module and transKey; and send the present message to a corresponding message processing module 48 or buffer module 46 according to the logic number.

The buffer module 46 is configured to buffer TRP information in the received TRP response. Since a TRP request is not required to be sent for each positioning request, the TRP request is set to be sent periodically, and the TRP information is buffered in a memory within the period. After the message is received, the message is decoded, and after the message is determined to be a TRP response, the TRP information is acquired from the message and stored in the memory, and a current storage time t1 is recorded. After the next positioning request is received, the current time t2 is acquired, and then subtracted from t1, and it is determined whether the difference is within a buffer period; and when the difference exceeds the buffer time, the TRP request needs to be resent, and then the original TRP information is cleared and new information is restored.

The message processing module 48 is configured to receive a positioning request, send and receive a measurement message and perform positioning calculation, and finally return a positioning result. There are generally a plurality of message processing modules, which are mainly responsible for load sharing so as to prevent performance bottlenecks in individual modules. When a measurement request is sent, a logic number logicNo of a current message module 48 and a session identifier transKey of a positioning process need to be acquired; logicNo is shifted left by 11 bits (corresponding to the description above, which is not specifically limited), and then transKey is added to form the Transaction ID of each measurement request; and TRP information required in the measurement request is acquired from the buffer module 46. When the message processing module 48 receives a measurement response message sent by the distribution module, the message is decoded first to acquire the Transaction ID, the lower 11 bits of the Transaction ID is then taken to obtain transKey, and a current session is found according to transKey. After a measurement response is received, a measurement result is acquired from the message, and finally the position is calculated according to the measurement result.

Embodiments of the present disclosure further provide a computer-readable storage medium, a computer program is stored in the computer readable storage medium, wherein the computer program is configured to cause, when executed by a processor, the processor to perform the steps in any one of the method embodiments.

In some exemplary embodiments, the computer-readable storage medium may comprise, but is not limited to: various media that can store a computer program, such as a USB flash drive, a Read-Only Memory (ROM for short), a Random Access Memory (RAM for short), a portable hard disk, a magnetic disk, or an optical disc.

Embodiments of the present disclosure further provide an electronic device, including a memory and a processor, a computer program that is stored in the memory, and the processor is configured to execute the computer program to perform the steps in any one of the method embodiments.

In some exemplary embodiments, the electronic device may further comprise transmission device and input and output device, wherein the transmission device is connected to the processor, and the input and output device is connected to the processor.

For specific examples in the present embodiment, reference can be made to the examples described in the embodiments and exemplary embodiments, and thus they will not be repeated again in the present embodiment.

It is apparent that a person skilled in the art shall understand that the described modules or steps in the present disclosure may be implemented by using a general computing device, may be centralized on a single computing device or may be distributed on a network composed of multiple computing devices, and may be implemented by using executable program codes of the computing device. Thus, the program codes may be stored in a storage device and executed by the computing device, and in some cases, the shown or described steps may be executed in a sequence different from that shown herein, or the modules or steps are manufactured into integrated circuit modules, or multiple modules or steps therein are manufactured into a single integrated circuit module for implementation. Thus, the present disclosure is not limited to any specific hardware and software combinations.

The content above merely relates to preferred embodiments of the present disclosure, and is not intended to limit the present disclosure. For a person skilled in the art, the present disclosure may have various modifications and changes. Any modifications, equivalent replacements, improvements, etc. made within the principle of the present disclosure shall all fall within the scope of protection of the present disclosure.

## Claims

1. A method for processing a positioning message, comprising:
acquiring a message type of a positioning message received;
acquiring a session identifier from a NonUE message when the message type is the NonUE message that does not carry user information;
parsing out a logic number corresponding to a message processing queue according to the session identifier; and
distributing the positioning message to the corresponding message processing queue according to the logic number, so as to process the positioning message.

2. The method according to claim 1, wherein acquiring the session identifier from the NonUE message comprises:
decoding the NonUE message to obtain NRPPa information; and
acquiring the session identifier in the NRPPa information.

3. The method according to claim 1, wherein distributing the positioning message to the corresponding message processing queue according to the logic number so as to process the positioning message comprises:
extracting a transaction ID from the session identifier; and
allocating the positioning message to a corresponding transaction according to the transaction ID, and processing the positioning message by means of the message processing queue on the basis of the transaction.

4. The method according to claim 1, wherein acquiring the message type of the positioning message comprises:
receiving the positioning message sent by an authentication management function ,AMF;
acquiring a uniform resource locator ,URL, in the positioning message; and
determining the message type of the positioning message according to the URL;
in response to the URL comprises determine-location, determining that the positioning message is a positioning request message;
in response to the URL comprises n2-notification, determining that the positioning message is a UE message; and
in response to the URL comprises non-ue-n2-notification, determining that the message is the NonUE message.

5. The method according to claim 4, wherein the method further comprises:
when it is determined that the positioning message is the positioning request message, decoding the positioning request message, acquiring user information in the positioning request message, and distributing the positioning message to any message processing queue according to the user information so as to process the positioning message; and
when the positioning message is the UE message, acquiring user information from the URL, and distributing the positioning message to a corresponding message processing queue according to the user information so as to process the positioning message.

6. The method according to any one of claims 1 to 5, wherein before distributing the positioning message to the corresponding message processing queue according to the logic number so as to process the positioning message, the method further comprises:
sending a transmission reception point ,TRP, request message to the AMF at a preset time period in response to the positioning message is a TRP response message;
after receiving the TRP measurement response message, acquiring TRP information from the TRP response message; and
buffering the TRP information at a preset time period, and recording a buffer time.

7. The method according to claim 6, wherein after buffering the TRP information at the preset time period, and recording the buffer time, the method further comprises:
receiving a positioning request message, and acquiring a current time;
determining whether the difference between the current time and the buffer time is within the preset time period;
when the determination result is yes, not sending the TRP request message to the AMF; and
when the determination result is no, sending the TRP request message to the AMF, so as to receive the TRP measurement response message and update the buffered TRP message.

8. An apparatus for processing a positioning message, comprising:
a first acquisition module, configured to acquire a message type of a positioning message received;
a second acquisition module, configured to acquire a session identifier from a NonUE message when the message type is the NonUE message that does not carry user information;
a parsing module, configured to parse out a logic number corresponding to a message processing queue according to the session identifier; and
an allocation module, configured to distribute the positioning message to the corresponding message processing queue according to the logic number so as to process the positioning message.

9. A computer-readable storage medium, a computer program is stored in the computer readable storage medium, wherein the computer program is configured to cause, when executed by a processor, the processor to perform the method as claimed in any one of claims 1 to 7.

10. An electronic device, comprising a memory and a processor, a computer program that is stored in the memory, and the processor is configured to execute the computer program to perform the method as claimed in any one of claims 1 to 7.
